# EUROPÄISCHE PATENTSCHRIFT

(11) **EP 0 257 534 B1**
(45) Veröffentlichungstag und Bekanntmachung des Hinweises auf die Patenterteilung: **07.12.1994**
(21) Anmeldenummer: 87112005.1
(22) Anmeldetag: 19.08.1987
(51) Int. Cl.: G11B 27/10, G11B 15/02, G11B 27/00, G11B 27/34, G11B 15/68, G04G 15/00, H04N 7/087

(54) **Einrichtung zum Aufzeichnen und schnellen Wiederauffinden von Videosignalabschnitten auf einem Magnetband**
Device for recording and fast access to video signal parts on a magnetic tape
Dispositif pour enregistrer et retrouver rapidement des chapitres de signaux vidéo sur une bande magnétique

(30) Priorität: 23.08.1986 DE 3628743
(43) Veröffentlichungstag der Anmeldung: 02.03.1988
(73) Patentinhaber: GRUNDIG E.M.V. Elektro-Mechanische Versuchsanstalt Max Grundig, D-90762 Fürth (DE)
(72) Erfinder: Schülein, Reinhard, Dipl.-Ing., D-8510 Fürth (DE); Bratenstein, Ernst, D-8510 Fürth (DE)

(56) Entgegenhaltungen:
- EP-A- 0 029 946
- EP-A- 0 127 341
- EP-A- 0 169 597
- EP-A- 0 191 149
- BE-A- 886 928
- DE-A- 2 939 912
- GB-A- 2 126 002
- GB-A- 2 155 713
- NL-A- 7 901 801
- US-A- 3 988 778
- US-A- 4 210 785
- US-A- 4 224 644
- NTZ NACHRICHTECHNISCHE ZEITSCHRIFT. vol. 35, no. 6, Juni 1982, BERLIN DE Seiten368 - 376; Krüger: "Das digitale Fernsehkennungssystem ZPS"
- PATENT ABSTRACTS OF JAPAN vol. 6, no. 79 (P-115)(957) 18 Mai 1982, & JP-A-57 015255
- INTERNATIONAL CONFERENCE ON COMMUNICATIONS,IEEE. vol. I-III, 1977, New York(US) MARTI et al.: "PROBLEMS OF CHOICE OF A TELETEXT SYSTEM IN EUROPEANCOUNTRIES" "Seite 19.3-28/ 19.3-34"
- GRUNDIG TECHNISCHE INFORMATIONEN. vol. 32, no. 2/3, FURTH DE Seiten 63 - 78;KORNHAAS: "Der neue GRUNDIG Videorecorder VS 380 HiFi Stereo"*Seite 63-Seite66,linke Spalte,Zeile 35

## Beschreibung

Die Erfindung betrifft einen Rekorder mit den im Oberbegriff des Anspruchs 1 angegebenen Merkmalen.

Zum schnellen Auffinden von Informationsabschnitten auf einem Aufzeichnungsträger sind der Fachwelt bereits verschiedene Möglichkeiten bekannt Die meisten dieser Möglichkeiten beruhen darauf, bei der Aufzeichnung an bestimmten Stellen des Aufzeichnungsträgers bestimmte Kennungen aufzubringen, wie z. B. Zeitmarken.
Die Zählung dieser Zeitmarken liefert eine Ortsinformation, die zum schnellen Auffinden eines bestimmten Informationsabschnittes verwendet werden kann. Die Ortsinformation kann vom Benutzer bei Bedarf durch Betätigung eines Bedienelementes in einem geräteseitigen Speicher abgelegt werden,welcher bei einem bekannten Bandspeichergerät (siehe US 3 988 778) zur Abspeicherung der einem einzigen Magnetband zugeordneten Ortsinformationen ausgebildet ist. Soll nun ein bestimmter Informationsabschnitt wiedergegeben werden, so wird die zugehörige Ortsinformation aus dem Speicher abgerufen, und das Band im schnellen Suchlaufbetrieb zur gewünschten Stelle gebracht. Bei diesem schnellen Suchlaufbetrieb muß sich das Band im eingefädelten Zustand befinden, da die auf dem Band aufgebrachten Zeitmarken zur Bestimmung der Ist-Ortsinformation gezählt werden müssen.

Weiterhin ist es aus der EP-B 29 946 und der US 4 224 644 bereits bekannt, die abgespeicherten Ortsinformationen vor der Entnahme der Bandkassette aus dem Speicher des Magnetbandgerätes auf einen aufzeichnungsfreien Abschnitt (z. B. Anfangs- oder Endbereich) des Magnetbandes zu übertragen und beim erneuten Laden des Magnetbandes wieder in den geräteseitigen Speicher zu übernehmen.

Aus der EP-A 169 597 ist ein Compact-disc digital audio player bekannt. Bei diesem bekannten Gerät ist ein Speicher vorgesehen, in dem neben Orts- bzw. Zeitinformationen bezüglich mehrerer bevorzugter Aufzeichnungsträgerstellen auch Informationen abgespeichert sind, die eine Identifizierung der eingelegten CD-Platte ermöglichen. Diese Identifizierung und das schnelle Auffinden einer bevorzugten Bandstelle erfolgt durch Vergleich der abgespeicherten Informationen mit Informationen, die als Hilfscode in der digitalen Audioinformation enthalten sind.

Ferner ist es bereits bekannt, bei der Aufzeichnung manuell ein Spielzeitinhaltsverzeichnis zu erstellen und bei der Wiedergabe einen gewünschten Signalabschnitt (beispielsweise mittels eines GOTO-Befehls) im schnellen Umspulbetrieb (bei ausgefädeltem Band) anzufahren.

Aus der US-A-4,210,785 ist eine Einrichtung bekannt, mittels der eine Wiedergabe von bereits getätigten Aufzeichnungen eines Magnetbandes in jeder beliebigen Reihenfolge möglich ist. Dabei wird von einem Inhaltsverzeichnis Gebrauch gemacht, welches in einer Längsspur des Magnetbandes in der Nähe des Bandanfangs aufgezeichnet ist.

Aus der BE-A-886.928 ist ein Magnetbandgerät bekannt, welches einen vorzugsweise nichtflüchtigen Speicher aufweist, welcher Daten für eine Reihe von Kassetten enthält. Zu diesen Daten gehören beispielsweise
- Titel und Nummer der Kassette,
- die momentane Magnetbandposition,
- Name, Titel und Position jeder Aufzeichnung,
- die noch verfügbare Restspielzeit der Kassette,
- charakteristische Kassettendaten, etc.

Der im Magnetbandgerät angeordnete nichtflüchtige Speicher arbeitet mit einem im zugehörigen Stammpatent BE-A-871596 näher beschriebenen, im Gehäuse der Magnetbandkassette angeordneten weiteren Speicher zusammen. Die Abspeicherung des Bandstandes erfolgt beim bekannten Magnetbandgerät nach Eingabe eines bestimmten Bedienbefehls automatisch.

Der Erfindung liegt die Aufgabe zugrunde, einen Rekorder mit den im Oberbegriff des Anspruchs 1 angegebenen Merkmalen, wie er aus der BE-A-886 928 bekannt ist, zu vereinfachen und zu verbessern.

Diese Aufgabe wird bei einem Rekorder mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den abhängigen Ansprüchen.

Zum Auffinden des gewünschten Videosignalabschnitts kann der schnelle Umspulbetrieb verwendet werden kann, ohne daß es eines bei der Aufzeichnung manuell erstellten genauen Spielzeitverzeichnisses bedarf. Dies ist vor allem bei Eigenaufzeichnungen auf Heimvideorecordern von Vorteil. Ferner ist es aufgrund der Abspeicherung der spielzeitspezifischen Informationen bei einer Vielzahl von Magnetbandkassetten (z. B. 20, 30 oder 50) möglich, auch beim Kassettenwechsel nahezu verzögerungsfrei einen gewünschten Videosignalabschnitt anzufahren. Weitere vorteilhafte Eigenschaften der Einrichtung nach der Erfindung ergeben sich aus der folgenden Erläuterung eines Ausführungsbeispiels.

An zehn aufeinanderfolgenden Tagen soll jeweils zur gleichen Tageszeit eine bestimmte Fernsehsendung (z. B. die Tagesschau) mittels eines Videorecorders magnetisch aufgezeichnet werden. Hierzu wird eine in vorteilhafter Weise mit einer Kennziffer bzw. Kennzahl (beispielsweise "10") versehene Magnetbandkassette in den Videorecorder eingelegt. Nach dem Einlegen der Kassette wird mit Hilfe der Zehnertastatur des Videorecorders der eingelegten Magnetbandkassette ein bestimmter Speicherbereich des Speichers des Videorecorders zugeordnet (beispielsweise Speicherbereich Nr. 10).

Anschließend wird der Recorder in bekannter Weise derart programmiert, daß er an den zehn oben genannten Tagen zu den gewünschten Zeiten ein- und ausschaltet.

Beim Erreichen der Anfangszeit der ersten aufzuzeichnenden Sendung setzt der Bandtransportmotor das Band in Bewegung. Gleichzeitig wird der Aufnahmestartzeitpunkt (= seit dem Bandanfang abgelaufene Spielzeit bei Aufzeichnungsbeginn) auf bekannte Weise erfaßt und automatisch im oben genannten Speicherbereich abgelegt. Der Mikroprozessor ordnet diesem Aufnahmestartzeitpunkt eine Rangnummer bzw. laufende Nummer zu, die als Kennung anzusehen ist, beispielsweise "1".

Ist die erste aufzuzeichnende Sendung zu Ende bzw. der Aufnahmeendzeitpunkt der ersten aufzuzeichnenden Sendung erreicht, dann setzt der Bandtransportmotor das Band wieder still. Gleichzeitig wird der Aufnahmeendzeitpunkt der ersten aufzuzeichnenden Sendung (= seit dem Bandanfang abgelaufene Spielzeit bei Aufzeichnungsende) auf grundsätzlich bekannte Weise erfaßt und automatisch an einem weiteren Speicherplatz innerhalb des oben genannten Speicherbereiches abgelegt.

Auf dieselbe Art und Weise werden auch Aufnahmestartzeitpunkt und Aufnahmeendzeitpunkt der weiteren neun aufzuzeichnenden Sendungen automatisch nacheinander im genannten Speicherbereich abgelegt, wobei der Mikroprozessor den Aufnahmestartzeitpunkten fortlaufende Rangnummern (2 bis 10) zuteilt.

Nach Entnahme der Magnetbandkassette aus dem Videorecorder bleiben die im genannten Speicherbereich abgelegten Spielzeitinformationen erhalten, so daß der Benutzer kein manuell erstelltes zeitgenaues Spielzeit-Inhaltsverzeichnis benötigt, sondern lediglich eine Übersicht über die aufgezeichneten Sendungen bzw. Titel, wie sie heute bei im Handel erhältlichen bespielten Audiokassetten üblich ist. Diese Übersicht über die aufgezeichneten Sendungen bzw. Titel kann manuell erstellt oder auch bei der Aufzeichnung aus einer parallel zur eigentlichen Sendung übertragenen Begleitinformation gewonnen und über einen an den Videorecorder angeschlossenen Drucker ausgegeben werden.

Das schnelle Wiederauffinden einer bestimmten, auf der Kassette 10 aufgezeichneten Sendung geschieht wie folgt: Die Kassette wird in den Videorecorder eingelegt. Mittels der Zehnertastatur wird der zugehörige Speicherbereich (Speicherbereich Nr. 10) des Speichers ausgewählt. Anschließend wird - ebenfalls mittels der Zehnertastatur - die Rangnummer der gewünschten Sendung (z. B. "5") eingegeben und eine Übernahmetaste gedrückt, beispielsweise die Wiedergabetaste. Dadurch wird das Band im schnellen Umspulbetrieb, also im ausgefädelten Zustand, zu der dem Anfang der fünften aufgezeichneten Sendung entsprechenden Bandstelle gespult (gegebenenfalls auch an eine Bandstelle kurz vorher), wobei der Speicher die spielzeitspezifischen Daten liefert. Anschließend schaltet das Gerät automatisch auf Wiedergabe.

Ferner kann als Übernahmetaste die Suchlauftaste dienen. In diesem Fall würde das Gerät nach dem Erreichen der gewünschten Bandstelle, welche im schnellen Umspulbetrieb angefahren wird, automatisch eine Wiedergabe im Suchlaufbetrieb durchführen. Ebenso kann auch die Zeitlupentaste als Übernahmetaste gewählt werden.

Auf diese Art und Weise kann ein Kassettenmagazin, bestehend aus einer Vielzahl von Kassetten, angelegt werden. Jeder dieser Kassetten ist ein bestimmter Speicherbereich des Speichers im Videorecorder zugeordnet, in dem die spielzeitspezifischen Daten der auf der Kassette aufgezeichneten Sendungen abgespeichert sind. Folglich kann nach dem Einlegen jeder dieser Kassetten des Kassettenmagazins und der Eingabe der Kassettennummer, die in vorteilhafter Weise der Nummer des zugehörigen Speicherbereichs entspricht, sowie der Eingabe der Rangnummer der gewünschten Sendung die zugehörige Bandstelle verzögerungsfrei im schnellen Umspulbetrieb angefahren werden.

Die Zuordnung eines bestimmten Speicherbereiches zu der jeweils eingelegten Magnetbandkassette muß nicht durch die Bedientastatur erfolgen. Es ist ebenso denkbar, daß die Magnetbandkassette anhand einer beliebigen Kennung, die von Kassette zu Kassette unterschiedlich sein muß, automatisch identifiziert wird, beispielsweise unter Verwendung eines Barcode-Aufklebers.

Ferner ist es möglich, einen bereits belegten Speicherbereich neu zu belegen. Dies ist beispielsweise dann von Bedeutung, wenn eine bereits bespielte Kassette mit neuer Information belegt werden oder eine neue Kassette eine dem Kassettenmagazin zugehörige Kassette ersetzen soll.

Eine vorteilhafte Weiterbildung der Erfindung besteht darin, zusätzlich zu der automatischen Abspeicherung der Aufnahmestartzeitpunkte eine mittels einer Taste der Bedientastatur auslösbare Abspeicherung weiterer Zeitpunkte vorzusehen. Auf diese Weise können beispielsweise die Anfangszeitpunkte einzelner Lieder einer Musiksendung abgespeichert und damit bei der Wiedergabe im schnellen Umspulbetrieb direkt angefahren werden.

Weiterhin kann anstelle des Aufnahmestart- und Endzeitpunktes eines Videosignalabschnittes auch eine videosignalabschnittsspezifische Kennung abgespeichert werden. Als solche kann beispielsweise bei aufzuzeichnenden Fernsehsendungen eine vom Sender angebotene VPS-Kennung verwendet werden. Sollen hingegen mittels einer Fernsehkamera aufgenommene Szenen aufgezeichnet werden, so eignet sich ein manuell eingegebener Klartext als Kennung.

Eine vorteilhafte Weiterbildung der Erfindung besteht darin, den Inhalt des Speichers in Form eines Inhaltsverzeichnisses auf einer Anzeige darzustellen, beispielsweise dem Bildschirm eines angeschlossenen Fernsehempfängers. Von dort aus kann dann beispielsweise mittels eines Cursors ein bestimmter Videosignalabschnitt bzw. eine bestimmte Szene ausgewählt und auf die oben beschriebene Weise angefahren werden.

## Patentansprüche

1. Rekorder zum Aufzeichnen von Videosignalabschnitten auf einem Magnetband und zum schnellen Wiederauffinden und zur Wiedergabe dieser Videosignalabschnitte, wobei den verschiedenen aufzuzeichnenden Videosignalabschnitten bei ihrer Aufnahme Kennungen zugeordnet werden, mit
- einer Bedientastatur,
- einem Mikroprozessor, und
- einem einen festen Bestandteil des Rekorders bildenden, nichtflüchtigen Speicher zur Abspeicherung von Informationen über eine Vielzahl von in dem Rekorder benutzbaren Magnetbandkassetten, wobei in dem Speicher den verschiedenen Magnetbandkassetten jeweils ein bestimmter Speicherbereich zugeordnet ist,
und wobei zum Wiederauffinden eines gewünschten Videosignalabschnittes die diesem Signalabschnitt zugeordnete Kennung mittels der Bedientastatur eingegeben, die dieser Kennung zugeordnete Sollinformation über die örtliche Lage des Signalabschnittes ermittelt und nachfolgend, während des im schnellen Umspulbetrieb erfolgenden Bandtransports, diese Sollinformation in einem Vergleicher mit einer dem momentanen Bandstand entsprechenden Ist-Information verglichen wird, **dadurch gekennzeichnet**, daß der Speicher des Rekorders auch zur Abspeicherung der Informationen über die örtliche Lage der Videosignalabschnitte auf der Vielzahl von Magnetbandkassetten dient und daß der Mikroprozessor derart programmiert ist, daß bei der Aufzeichnung von einem oder mehreren vorprogrammierten Videosignalabschnitt(en) die Informationen über deren örtliche Lage jeweils automatisch in dem der eingelegten Kassette zugeordneten Bereich des Speichers des Rekorders abgelegt werden.

2. Einrichtung nach Anspruch 1,
**dadurch gekennzeichnet**, daß die Informationen über die örtliche Lage der Videosignalabschnitte die Aufnahmestartzeitpunkte sind.

3. Einrichtung nach Anspruch 1,
**dadurch gekennzeichnet**, daß die Informationen über die örtliche Lage der Videosignalabschnitte die Aufnahmestart- und Aufnahmeendzeitpunkte sind.

4. Einrichtung nach einem der vorhergehenden Ansprüche,
**dadurch gekennzeichnet,** daß die Zuordnung der Speicherbereiche zu den verschiedenen Magnetbandkassetten mittels der Bedientastatur erfolgt.

5. Einrichtung nach Anspruch 4,
**dadurch gekennzeichnet**, daß die Zuordnung veränderbar ist.

6. Einrichtung nach einem der vorhergehenden Ansprüche,
**dadurch gekennzeichnet**, daß den abgespeicherten Informationen über die örtliche Lage der Videosignalabschnitte Rangnummern zugeordnet werden.

7. Einrichtung nach einem der vorhergehenden Ansprüche,
**dadurch gekennzeichnet**, daß zusätzlich zur automatischen Abspeicherung von Informationen über die örtliche Lage der Videosignalabschnitte eine manuell auslösbare Abspeicherung von Informationen über die örtliche Lage beliebiger Szenen innerhalb jedes Videosignalabschnittes vorgesehen ist.

8. Einrichtung nach einem der vorhergehenden Ansprüche,
**dadurch gekennzeichnet**, daß der Speicherinhalt in Form eines Inhaltsverzeichnisses auf einer Anzeige darstellbar ist.

9. Einrichtung nach Anspruch 8,
**dadurch gekennzeichnet**, daß die Auswahl einer wiederzugebenden Szene bzw. eines wiederzugebenden Videosignalbschnittes mittels einer optischen Markierung innerhalb des auf der Anzeige dargestellten Inhaltsverzeichnisses erfolgt.

## Claims

1. Recorder for recording video signal sectors on a magnetic tape and for rapidly locating and playing back said video signal sectors, identifying signals being allocated to the various video signal sectors to be recorded during their recording, comprising
- an operating keyboard,
- a microprocessor, and
- a nonvolatile memory which forms a permanent component of the recorder and is designed to store information about a multiplicity of magnetic tape cassettes which can be used in the recorder, a certain memory region in the memory being assigned in each case to the various magnetic tape cassettes,
and, in order to relocate a desired video signal sector, the identification signal assigned to said signal sector being entered by means of the keyboard, the reference information assigned to said identification signal and relating to the positional location of the signal sector being determined and said reference information then being compared in a comparator with actual information corresponding to the current tape position during the tape transport which takes place in the fast wind mode, characterized in that the memory of the recorder also serves to store the information relating to the positional location of the video signal sectors on the multiplicity of magnetic tape cassettes, and in that the microprocessor is programmed so that, during the recording of one or more preprogrammed video signal sector(s), the information relating to its/their positional location is automatically stored in each case in that region of the memory of the recorder which is assigned to the cassette inserted.

2. Device according to Claim 1, characterized in that the information relating to the positional location of the video signal sectors comprises the recording start times.

3. Device according to Claim 1, characterized in that the information relating to the positional location of the video signal sectors comprises the recording start times and record end times.

4. Device according to one of the preceding claims, characterized in that the memory region is assigned to the various magnetic tape cassettes by means of the operating keyboard.

5. Device according to Claim 4, characterized in that the assignment can be altered.

6. Device according to one of the preceding claims, characterized in that rank numbers are assigned to the stored information relating to the positional location of the video signal sectors.

7. Device according to one of the preceding claims, characterized in that, in addition to automatically storing information relating to the positional location of the video signal sectors, a manually triggerable storage of information relating to the positional location of any desired scenes is provided within each video signal sector.

8. Device according to one of the preceding claims, characterized in that the memory content can be displayed in the form of a contents list on a display.

9. Device according to Claim 8, characterized in that a scene to be played back or a video signal sector to be played back is selected by means of a visual marking inside the contents list displayed on the display.

## Revendications

1. Enregistreur pour l'enregistrement de sections de signaux vidéo sur une bande magnétique et pour la recherche rapide et la reproduction de ces sections de signaux vidéo, dans lequel des indicateurs sont affectés aux diverses sections de signaux vidéo au cours de leur enregistrement, l'enregistreur comportant :
- un clavier de service,
- un microprocesseur, et
- une mémoire non volatile qui constitue une partie fixe d'un enregistreur pour mémoriser des informations sur une série de cassettes à bande magnétique utilisables dans l'enregistreur, un emplacement de mémoire déterminé étant affectée respectivement aux diverses cassettes à bande magnétique dans la mémoire, et dans lequel, pour retrouver une section de signal vidéo souhaitée, on introduit l'indication affectée à cette section de signal à l'aide du clavier de service, on obtient les informations théoriques affectées à cette indication et se rapportant à la position locale de la section de signal et, ensuite, pendant le transport de la bande qui se fait par déroulement rapide, on compare ces informations théoriques, dans un comparateur, à des informations réelles correspondant à l'état momentané de la bande, caractérisé en ce que la mémoire de l'enregistreur sert également à mémoriser les informations sur la position locale des sections de signaux vidéo sur la série de cassettes à bande magnétique et le microprocesseur est programmé de telle sorte que, lors de l'enregistrement d'une ou plusieurs sections de signaux vidéo préprogrammées, les informations sur leur position locale sont stockées dans l'emplacement de la mémoire de l'enregistreur affecté à la cassette introduite.

2. Dispositif selon la revendication 1, caractérisé en ce que les informations se rapportant à la position locale des sections de signaux vidéo sont les temps de début des enregistrements.

3. Dispositif selon la revendication 1, caractérisé en ce que les informations se rapportant à la position locale des sections de signaux vidéo sont les temps de début et de fin des enregistrements.

4. Dispositif selon l'une quelconque des revendications précédentes, caractérisé en ce que l'affectation de l'emplacement de mémoire aux diverses cassettes à bande magnétique se fait à l'aide du clavier de service.

5. Dispositif selon la revendication 4, caractérisé en ce que l'affectation peut être modifiée.

6. Dispositif selon l'une quelconque des revendications précédentes, caractérisé en ce qu'on affecte aux informations mémorisées se rapportant à la position locale des sections de signaux vidéo des numéros d'ordre.

7. Dispositif selon l'une quelconque des revendications précédentes, caractérisé en ce que, en plus de la mémorisation automatique d'informations se rapportant à la position locale des sections de signaux vidéo, il est prévu une mémorisation manuelle d'informations se rapportant à la position locale de scènes quelconques à l'intérieur de chaque section de signaux vidéo.

8. Dispositif selon l'une quelconque des revendications précédentes, caractérisé en ce que le contenu de la mémoire peut se présenter sous la forme d'une table des matières sur un système d'affichage.

9. Dispositif selon la revendication 1, caractérisé en ce que la sélection d'une scène à reproduire ou d'une section de signaux vidéo à reproduire se fait via un marquage optique à l'intérieur de la table des matières représentée sur le système d'affichage.
